Europäisches Patentamt

European Patent Office

Office européen des brevets

(19)

(11) Veröffentlichungsnummer: **0 011 851**
**B1**

# (12) EUROPÄISCHE PATENTSCHRIFT

(45) Veröffentlichungstag der Patentschrift:
**30.12.81**

(21) Anmeldenummer: **79104708.7**

(22) Anmeldetag: **27.11.79**

(51) Int. Cl.³: **G 03 B 27/30**, G 03 D 9/00

(54) Vorrichtung zum Belichten und Entwickeln von lichtempfindlichem Material.

(30) Priorität: **30.11.78 DE 2851893**

(43) Veröffentlichungstag der Anmeldung:
**11.06.80 Patentblatt 80/12**

(45) Bekanntmachung des Hinweises auf die Patenterteilung:
**30.12.81 Patentblatt 81/52**

(84) Benannte Vertragsstaaten:
**BE CH FR GB NL**

(56) Entgegenhaltungen:
**CH-A-327 750**
**DE-B-1 128 748**
**DE-B-1 250 266**
**US-A-3 308 717**

(73) Patentinhaber: **AGFA-GEVAERT Aktiengesellschaft, Camera-Werk Patent- und Lizenzwesen Postfach, D-8000 München 90 (DE)**

(72) Erfinder: **Stemme, Otto, Dr., Heideckstrasse 29, D-8000 München 19 (DE)**
Erfinder: **Fergg, Berthold, Dr., Enzianring 3, D-8021 Taufkirchen (DE)**
Erfinder: **Osegowitsch, Viktor, Ahornring 47, D-8021 Taufkirchen (DE)**
Erfinder: **Viehrig, Wolfgang, Sachranger Strasse 16, D-8000 München 90 (DE)**

## Vorrichtung zum Belichten und Entwickeln von lichtempfindlichem Material

Die Erfindung betrifft eine Vorrichtung zum Belichten und Entwickeln von lichtempfindlichem Material, mit einer eine Lichtquelle, Farbfilter, eine Vorlagenbühne und eine einstellbare Abbildungsoptik aufweisenden Belichtungseinrichtung, einer Positivbühne zur Aufnahme des zu belichtenden lichtempfindlichen Materials und einer seitlich neben der Positivbühne angeordneten Entwicklungsstation.

Aus der US–PS 3 308 717 ist eine Vorrichtung zum Vergrössern und Kopieren bekannt, bei der Vergrösserungs- und Entwicklungseinrichtung in einem Gerät zusammengefasst sind. Das in Rollenform vorliegende Fotopapier wird dabei von einer Positivbühne in die sich seitlich direkt daran anschliessende Entwicklungsstaion mit den einzelnen Entwicklungsbädern geführt. Diese Vorrichtung ist sehr ausladend und damit für Heimzwecke völlig ungeeignet. Ausserdem ist der Transport für das Material verhältnismässig kompliziert, da bestimmte Verweilzeiten des Materials in den einzelnen Bädern eingehalten werden müssen.

Aus der DE–B–1 128 748 ist eine nach dem Diffusionsverfahren arbeitende Vorrichtung bekannt, bei welcher eine Belichtungseinrichtung und eine Entwicklungseinrichtung nebeneinander angeordnet sind und das Negativpapier von der Belichtungseinrichtung direkt in die Entwicklungseinrichtung geführt wird.

Aufgabe der Erfindung ist es, eine Vorrichtung zu schaffen, die durch kleine Baugrösse und Einfachheit in der Bedienung als Heimlabor geeignet ist.

Diese Aufgabe wird durch die im kennzeichnenden Teil des Anspruchs 1 angeführten Mittel gelöst.

Durch die Anwendung des Diffusionsverfahrens für die Vergrösserung von farbigen Vorlagen und Erstellung von Colorbildern kann ein Gerät von sehr kleiner Bauweise erreicht werden. Die zum Teil oder ganz unterhalb der Positivbühne herausragende Entwicklungsstation kann sehr kurz gehalten sein, da nur ein Benetzungsbad erforderlich ist. Mit der bogenförmig nach unten gerichteten Führung und mit seiner wieder zur Eingabeseite zurückgeführten Bewegungsrichtung wird ein minimaler Platzverbrauch hinsichtlich Länge und Breite der Vorrichtung erreicht. Die Betätigung des Schwenkhebels sowie der beiden Transportwalzenpaare kann von Hand erfolgen, so dass im Nassbereich keine elektrische Zuleitung notwendig wird.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert ist. Es zeigen:

Fig. 1 eine schematische Ansicht der Vorrichtung;

Fig. 2 einen Querschnitt durch die in Fig. 1 angedeutete Entwicklungsstation und durch einen Teil der Vorlagenbühne; und

Fig. 3 einen Teilquerschnitt III-III aus Fig. 2.

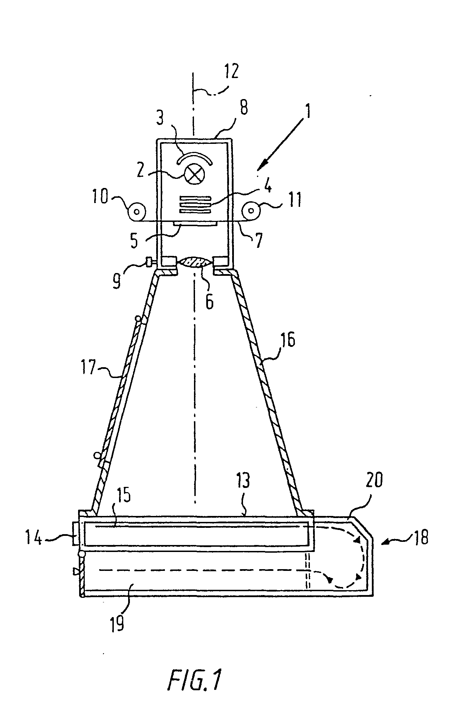

In Fig. 1 ist mit 1 eine Belichtungseinrichtung mit einer Lichtquelle 2, einem Spiegel 3, einer Filteranordnung 4, einer Vorlagenbühne 5 und einer variablen Optik 6 bezeichnet. Die Elemente 2 bis 6 der Belichtungseinrichtung 1 sind in einem Gehäuse 8 angeordnet, an dessen Aussenseite sich ein Drehknopf 9 befindet, durch den die Scharfeinstellung durch Verändern der Optik 6 vorgenommen werden kann. In der Vorlagenbühne 5 liegt eine bandförmige Vorlage 7, welche durch geeignete Mittel von einer Abwickelspule 10 zu einer Aufwickelspule 11 transportiert werden kann. Selbstverständlich kann in der Belichtungseinrichtung 1 auch eine Handhabung einzelner Vorlagen vorgesehen werden.

Auf der optischen Achse 12 der Abbildungsoptik 6 ist eine Positivbühne 13 vorgesehen, in welche eine Kassette 14 mit lichtempfindlichem Material 15 eingesetzt ist. Das lichtempfindliche Material 15 in der Kassette 14 besteht aus einem Pack von mehreren Zwei-Blatt-Einheiten, welche durch geeignete Mittel von Hand aus der Positivebene nach ihrer Belichtung herausbewegbar sind. Statt einer Kassette 14 können auch einzelne Zwei-Blatt-Einheiten von Hand eingelegt werden.

Oberhalb der Aufnahme 13 ist ein Tubus 16 vorgesehen, der an seiner Oberseite die Belichtungseinrichtung 1 trägt und den Raum zwischen Belichtungseinrichtung 1 und Positivbühne 13 lichtdicht verschliesst. An dem Tubus 16 ist eine Klappe 17 angebracht, die in geöffnetem Zustand der Bedienungsperson zum Zwecke des Scharfeinstellens einen Blick auf die Positivebene freigibt.

An einer Seite der Positivbühne 13 schliesst sich eine Entwicklungsstation 18 und ein Diffusionsraum 19 an. Entwicklungsstation 18 und Diffusionsraum 19 sind dabei so angeordnet, dass der Diffusionsraum völlig unterhalb der Positivbühne 13 liegt und die Entwicklungsstation 18 gegebenenfalls zumindest teilweise unter diese hineinragt. Der Hauptteil der Entwicklungsstation 18 ist jedoch in einem schmalen Gehäuse 20 untergebracht, dessen Höhe im wesentlichen gleich ist der Höhe von Positivbühne 13 und Diffusionsraum 19. Der Transport des lichtempfindlichen Materials verläuft demnach auf einem U-förmigen Weg, etwa wie mit gestrichelter Linie in Fig. 1 angedeutet ist.

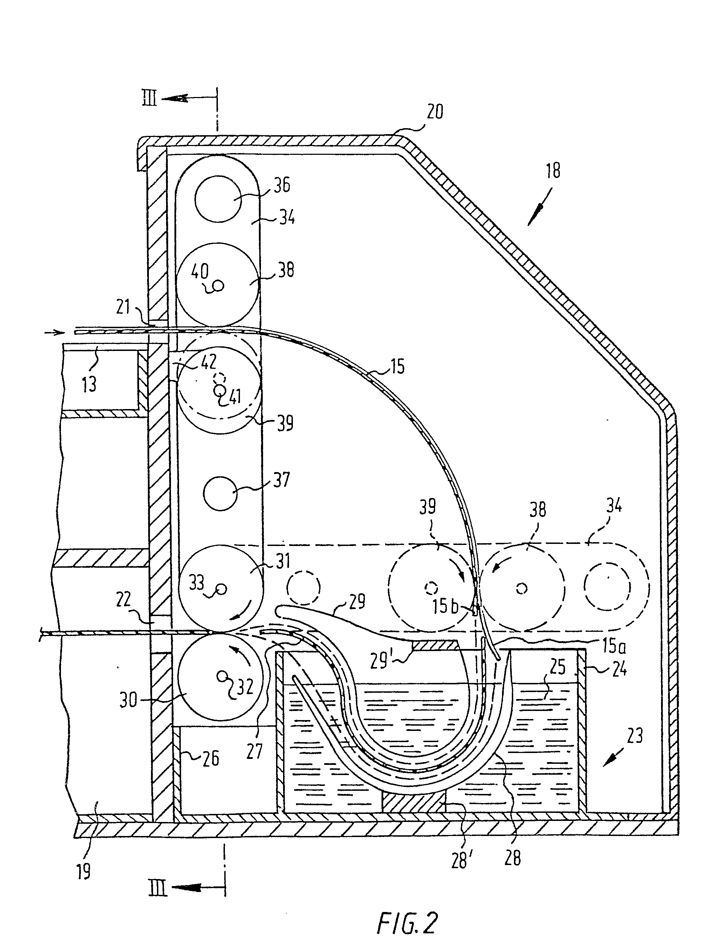

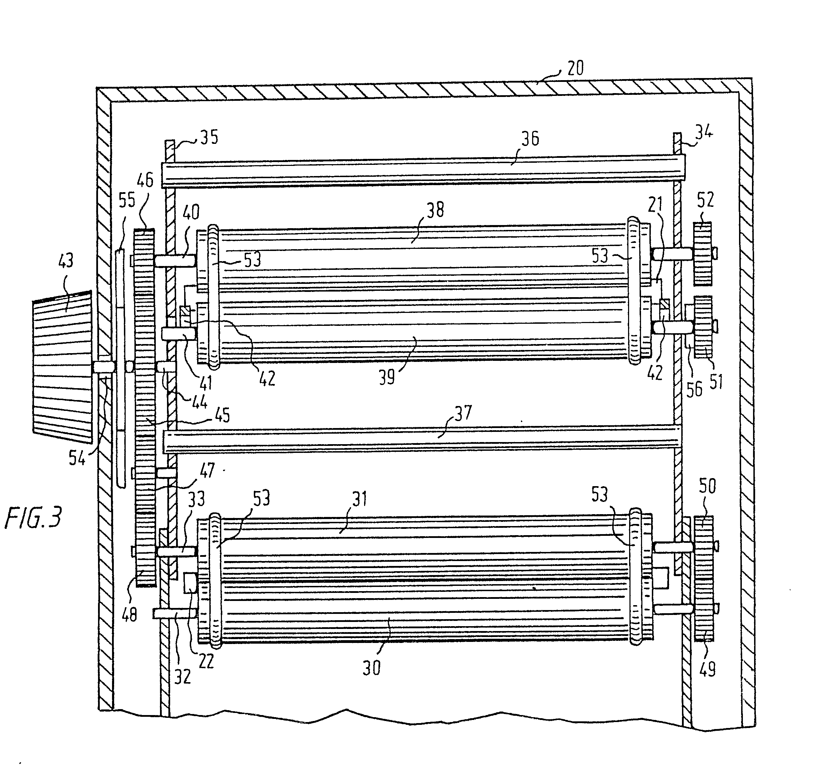

Die Entwicklungsstation 18 soll nun anhand der Fig. 2 näher beschrieben werden. In dem sich an die Positivbühne 13 anschliessenden Gehäuse 20 ist im oberen Bereich etwa in Höhe der Positivebene ein Schlitz 21 und auf derselben Seite im unteren Bereich ein Schlitz 22 ausgeformt, welcher in den Diffusionsraum 19 mündet. Am Boden der Entwicklungsstation 18 ist ein herausnehmbares Gestell 23 angeordnet, welches einen Behälter 24 für das Entwicklerbad 25 sowie eine Auffangwanne 26 aufweist. In dem Behälter 24 befindet sich ein Trennelement 27, das die Form eines geschwungenen Bleches aufweist und an den Seiten im Behälter 24 gehaltert ist. Beiderseits des Trennelementes 27 sind Führungselemente 28 und 29 angeordnet, welche rippenförmig von mit dem Behälter 24 verbundenen Querleisten 28' bzw. 29' ausgehen. Durch die Elemente 27 bis 29 werden zwei Kanäle gebildet, durch welche die beiden Blätter einer Zwei-Blatt-Einheit 15 geführt werden. Zwischen dem Austrittsschlitz 22 in den Diffusionsraum 19 und den die Blätter wieder zusammenführenden Enden des Trennelements 27 bzw. der Führungselemente 28 und 29 ist ein Abquetschwalzenpaar 30, 31 angeordnet, deren Achsen 32 bzw. 33 quer zur Transportrichtung und parallel zu den Schlitzen 22 bzw. 21 verlaufen. Auf der oberen Achse 33 des Walzenpaares 30, 31 sind an den beiden Enden der oberen Walze 31 Hebelarme 34 und 35 drehbar angeordnet, welche von einer vertikalen Stellung um 90 Grad in eine horizontale Stellung schwenkbar sind. Wie auch aus Fig. 3 zu entnehmen ist, sind die Hebelarme 34 und 35 mittels Querstangen 36 und 37 fest miteinander verbunden. Gegenüber dem oberen Schlitz 21 ist zwischen den Hebelarmen 34 und 35 ein Transportwalzenpaar 38 und 39 um Achsen 40 bzw. 41 drehbar angeordnet. Die Achse 41 der unteren Walze 39 ist dabei beweglich gelagert und kann mittels auf beiden Seiten angeordneten Abweiselementen mit Anlaufflächen 42 von ihrer fest angeordneten Gegenwalze 38 in der in der Fig. 2 dargestellten Stellung der Hebel 34 und 35 abgehoben werden.

Der Antrieb der Walzenpaare soll nun anhand der Fig. 3 verdeutlicht werden. Ausserhalb des Gehäuses 20 ist ein Drehknopf 43 dargestellt, der auf einer in dem Hebelarm 35 gelagerten Achse 44 sitzt. Auf der Achse 44 ist ferner ein Zahnrad 45 angeordnet, das einerseits mit einem mit der Walze 3 in Verbindung stehenden Zahnrad 46 und andererseits mit einem in dem Hebelarm 35 gelagerten Übertragungszahnrad 47 kämmt. Das Übertragungszahnrad 47 wiederum kämmt mit einem Zahnrad 48, das auf der Achse der Walze 31 fest angeordnet ist. Auf der Seite des Hebelarmes 34 sind auf den Achsen 32, 33, 41, 40 der Walzen 30, 31, 39 bzw. 38 Zahnräder 49, 50, 51 bzw. 52 angeordnet, wobei die Zahnräder 49 und 50 stets im Eingriff stehen, die Zahnräder 51 und 52 aufgrund der schrägen Anlaufflächen 42 auch ausser Eingriff stehen können.

Schliesslich zeigt Fig. 3 noch geschlossene Spiralfedern 53, welche zum Zwecke des Andrückens an beiden Seiten der jeweiligen Transportwalzenpaare angeordnet sind. Die Achse 44 läuft ferner in einem kreisförmig gebogenen Schlitz 54 in dem Gehäuse 20 und trägt zwischen der Innenseite des Gehäuses 20 und dem Zahnrad 45 zum Zwecke der Lichtabschirmung ein dünnes Blech 55.

Die Wirkungsweise der anhand der Fig. 1 bis 3 beschriebenen Vorrichtung ist nun folgendermassen:
Von der Bedienungsperson, die zweckmässigerweise gemäss Fig. 1 auf der linken Seite der Darstellung sitzen würde, wird die Vorlage 7 in der Belichtungseinrichtung vorbereitet und in die Positivbühne 13 eine einzelne Zwei-Blatt-Einheit oder eine Kassette 14 eingeschoben. In jedem Fall weist entweder die Zwei-Blatt-Einheit oder die obere Einheit in der Kassette 14 ein Führungsende auf, welches mit dem Einbringen des Materials bereits durch den Schlitz 21 in das gespreizte Transportwalzenpaar 30, 39 eingeführt wird.

Die Scharfeinstellung hat dabei bereits vor dem Einlegen des lichtempfindlichen Materials auf einer zur Materialdicke gleich dicken weissen Platte stattgefunden, oder aber auf einem das Material abdeckenden Blatt, das nach der Scharfeinstellung auf geeignete Weise vom Material abgezogen werden kann. Nach erfolgter Belichtung braucht die Bedienungsperson lediglich den Knopf 43 in dem Schlitz 54 des Gehäuses 20 zu verschieben, wodurch die Hebelarme 34, 35 um die Achse 33 um 90 Grad in die horizontale Lage verschwenkt werden. Nach einigen Millimetern dieser Bewegung läuft die Achse 41 von den Anlaufflächen 42 ab, so dass die Walze 39 aufgrund der Federkraft 53 an die Gegenwalze 38 angedrückt wird und damit das Führungsende des lichtempfindlichen Materials festhält.

Mit der Bewegung der Hebelarme 34, 35 wird also das Material aus der Positivebene heraus und in die Entwicklungsstation hereingezogen. Bei den Zwei-Blatt-Einheiten ist es dabei üblich, dass das in der Positivebene oben liegende Blatt in Transportrichtung gesehen über das untere Blatt hervorsteht, so dass beim letzten Teil der Bewegung der Hebelarme 34 und 35 zunächst das obere Blatt 15a das eine Ende des Trennelementes 27 berührt. Durch die gegenüber dem Walzenspalt der Walzen 38, 39 geringfügig versetzte Anordnung des Trennelementendes 27 wird dabei das Blatt 15a von der eigentlichen Transportrichtung etwas abgelenkt. Diese Ablenkung kann nur dadurch erfolgen, dass sich das Walzenpaar 38, 29 in einem Kreisbogen auf das Ende des Trennelementes 27 absenkt. Sobald die Hebelarme 34, 35 ihre horizontale Lage eingenommen haben, ist die Schwenkbewegung der Hebelarme beendet. Sodann beginnt die Bedienungsperson an dem Knopf 43 zu drehen, wodurch die Walzenpaare 38, 39 und 30, 31 in gleicher Transportrichtung gedreht werden. Nachdem der Walzenspalt des Walzenpaares 38, 39 zwischen das Trennelement 27 und das Führungselement 29 gerichtet ist, wird das untere Blatt 15b in diesen Kanal transportiert, wogegen das obere Blatt 15b in diesen Kanal transportiert, wogegen das obere Blatt 15a aufgrund der oben genannten Ablenkung in dem Kanal zwischen Trennelement 27 und Führungselement 28 befördert wird. Durch den Lauf des Walzenpaares 38, 39 werden die beiden Blätter 15a und 15b solange durch ihre Kanäle transportiert, bis sie das Abquetschwalzenpaar 30, 31 erreichen. Von diesem Walzenpaar werden die beiden Blätter nun zusammengedrückt und durch den Schlitz 22 in den Diffusionsraum 19 transportiert. Mit dem Zusammendrücken wird überschüssige Flüssigkeit abgequetscht und in dem Behälter 26 aufgefangen. Nachdem das zusammengeführte Blattpaar 15a, 15b das unter Abquetschwalzenpaar 30, 31 verlassen hat, hört die Bedienungsperson zu drehen auf und schwenkt die Hebel 34, 35 wieder in die obere, empfangsbereite Stellung, in welcher die Anlaufflächen 42 die untere Walze 39 wieder von der Gegenwalze 38 abheben. Damit kann das nächste Material belichtet und weiterbehandelt werden. Nach einer bestimmten Zeit kann die Zwei-Blatt-Einheit aus dem Diffusionsraum entnommen und die Blätter von Hand getrennt werden.

Damit bei der Schwenkbewegung der Hebel 34, 35 die Mitnahme des lichtempfindlichen Materials auch gesichert ist, ist es zweckmässig, bei einer der Walzen 38 oder 39 eine Rücklaufsperre 56 vorzusehen. Damit wird verhindert, dass bei einer zu starken Reibung des Materials in der Positivbühne sich die Walzen 38, 29 in Gegenrichtung drehen und damit das Material freigeben.

**Patentansprüche**

1. Vorrichtung zum Belichten und Entwickeln von lichtempfindlichem Material, mit einer eine Lichtquelle, Farbfilter, eine Vorlagenbühne und eine einstellbare Abbildungsoptik aufweisenden Belichtungseinrichtung, einer Positivbühne zur Aufnahme des zu belichtenden lichtempfindlichen Materials und einer seitlich neben der Positivbühne angeordneten Entwicklungsstation, dadurch gekennzeichnet, dass auf der Positivbühne (13) nach dem Diffusionsverfahren zu behandelnde, mit Führungsenden versehene Zwei-Blatt-Einheiten (15a, 15b) in der Weise angeordnet sind, dass das Führungsende der jeweils obersten Einheit zwischen die gespreizten Walzen eines Transportwalzenpaares (38, 39) zu liegen kommt, und dass das Transportwalzenpaar (38, 39) zwischen Schwenkhebeln (34, 45) angeordnet ist, die von einer Aufnahmestellung neben der Positivbühne unter Mitnahme des lichtempfindlichen Materials (15) durch das Transportwalzenpaar in eine Eingabestellung oberhalb eines in der Entwicklungsstation (18) angeordneten Entwicklerbades (25) schwenkbar sind.

2. Vorrichtung nach Anspruch 1, gekennzeichnet durch ein an der Ausgabeseite des Entwicklerbades (25) angeordnetes, zu einem unterhalb der Positivbühne (13) vorgesehenen Diffusionsraum (19) gerichtetes Abquetschwalzenpaar (30, 31), das antriebsmässig mit dem schwenkbaren Transportwalzenpaar (38, 39) gekoppelt ist.

3. Vorrichtung nach Anspruch 1 oder 2, dadurch gekennzeichnet, dass die Transportrichtung des lichtempfindlichen Materials (15) in dem Entwicklerbad (25) entgegen der Abzugsrichtung des Materials aus der Positivbühne (13) verläuft.

4. Vorrichtung nach einem der Ansprüche 1 bis 3, dadurch gekennzeichnet, dass die Schwenkhebel (34, 35) um eine Achse (33) der einen Walze des Abquetschwalzenpaares (30, 31) schwenkbar sind.

5. Vorrichtung nach einem der Ansprüche 1 bis 4, gekennzeichnet durch in der Nähe der Positivbühne (13) angeordnete Abweiselemente (42), welche in der Aufnahmestellung der Schwenkhebel (34, 35) die eine Walze (39) des Transportwalzenpaares gegen eine Federkraft (53) von der Gegenwalze (38) abheben.

6. Vorrichtung nach einem der Ansprüche 1 bis 5, dadurch gekennzeichnet, dass in dem Entwicklerbad (25) ein Trennelement (27) vorgesehen ist, von welchem ein Ende gegenüber dem Walzenspalt des in Eingabestellung befindlichen Transportwalzenpaares (38, 39) zum Zwecke der Auslenkung des einen vorstehenden Materialblattes (15a) versetzt angeordnet ist.

7. Vorrichtung nach einem der Ansprüche 1 bis 6, dadurch gekennzeichnet, dass die eine der Walzen (38, 39) des schwenkbaren Transportwalzenpaares mit einer Rücklaufsperre (56) verbunden ist.

8. Vorrichtung nach Anspruch 6, dadurch gekennzeichnet, dass der Behälter (24) des Entwicklerbades (25) mit dem Trennelement (27) sowie mit Führungselementen (28, 29) und eine Auffangwanne (26) unter dem Abquetschwalzenpaar (30, 31) in einem aus der Entwicklungsstation (18) herausnehmbaren Gestell (23) untergebracht sind.

**Revendications**

1. Appareil pour l'exposition et le développement de matière photosensible, comportant un dispositif d'exposition qui présente une source lumineuse, un filtre coloré, un porte-original et une optique réglable de formation d'image, un porte-positif destiné à recevoir la matière photosensible à exposer et un poste de développement disposé à côté du porte-positif, caractérisé par le fait que le porte-positif (13), des ensembles de deux feuilles (15a, 15b) à traiter par le procédé de diffusion, munis d'extrémités de guidage, sont disposés de telle sorte que l'extrémité de guidage de l'ensemble chaque fois situé tout en haut vient se placer entre les rouleaux écartés d'une paire de rouleaux transporteurs (38, 39) et que la paire de rouleaux transporteurs (38, 39) est disposée entre des leviers pivotants (34, 35) que l'on peut faire pivoter, la matière photosensible (15) étant entraînée par la paire de rouleaux transporteurs, d'une position d'exposition à côté du porte-positif à une position d'introduction au dessus d'un bain de développement (25) disposé dans le poste de développement (18).

2. Appareil selon la revendication 1, caractérisé par une paire de rouleaux d'essorage (30, 31), accouplée quant à l'entraînement à la paire de rouleaux transporteurs pivotants (38, 39), disposée du côté de sortie du bain de développement (25) et dirigée vers une chambre de diffusion (19) prévue en dessous du porte-positif (13).

3. Appareil selon l'une des revendications 1 et 2, caractérisé par le fait que le sens de transport de la matière photosensible (15) dans le bain de développement (25) est dirigé à l'envers du sens dans lequel la matière est retirée du porte-positif (13).

4. Appareil selon l'une des revendications 1 à 3, caractérisé par le fait que les leviers pivotants (34, 35) peuvent pivoter autour d'un axe (33) de l'un des rouleaux de la paire de rouleaux d'essorage (30, 31).

5. Appareil selon l'une des revendications 1 à 4, caractérisé par des éléments d'écartement (42) disposés au voisinage du porte-positif (13) et qui, lorsque les leviers pivotants (34, 35) sont dans la position d'exposition, écartent l'un des rouleaux (39) de la paire de rouleaux transporteurs du rouleau complémentaire (38), contre une force de ressort (53).

6. Appareil selon l'une des revendications 1 à 5, caractérisé par le fait que dans le bain de développement (25) est prévu un élément séparateur (27) dont une extrémité est disposée avec décalage relativement à l'interstice de la paire de rouleaux transporteurs (38, 39) placée en position d'introduction, afin de dévier l'une des feuilles de matière (15a) qui dépasse.

7. Appareil selon l'une des revendications 1 à 6, caractérisé par le fait que l'un des rouleaux (38, 39) de la paire de rouleaux transporteurs pivotants est relié à un blocage de rotation inverse (56).

8. Appareil selon la revendication 6, caractérisé par le fait que le récipient (24) du bain de développement (25), ainsi que l'élément séparateur (27), des éléments de guidage (28, 29) et une cuvette collectrice (26), sont disposés sous la paire de rouleaux d'essorage (30, 31), dans un bâti (23) pouvant être retiré du poste de développement (18).

**Claims**

1. Apparatus for exposing and developing light-sensitive material, having an exposure device that has a light source, colour filters, an original stage and an adjustable imageforming lens and having a positive stage for receiving the light-sensitive material to be exposed and a developing station arranged laterally adjacent to the positive stage, characterised in that two-sheet units (15a, 15b) which are provided with leading ends and are to be treated according to the diffusion process, are arranged on the positive stage (13) in such a manner that the leading end of the uppermost unit comes to lie between the parted rollers of a pair of transport rollers (38, 39), and that the pair of transport rollers (38, 39) is arranged between pivotable levers (34, 45) which can be pivoted from a receiving position next to the positive stage, whilst driving the light-sensitive material (15) trough the pair of transport rollers, into an insertion position above a developing bath (25) arranged in the developing station (18).

2. Apparatus according to claim 1, characterised by a pair of squeezing rollers (30, 31) arranged on the output side of the developing bath (25) and directed towards a diffusion chamber (19) provided underneath the positive stage (13) which pair of squeezing rollers is coupled, for drive, purposes, to the pivotable pair of transport rollers (38, 39).

3. Apparatus according to claim 1 or 2, characterised in that the direction of transport of the light-sensitive material (15) in the developing bath (25) is opposite to the direction of withdrawal of the material from the positive stage (13).

4. Apparatus according to one of claims 1 to 3, characterised in that the pivotable levers (34, 35) are pivotable about an axis (33) of one of the rollers of the pair of squeezing rollers (30, 31).

5. Apparatus according to one of claims 1 to 4, characterised by deflecting elements (42) arranged near the positive stage (13), which elements, when the pivotable levers (34, 35) are in the receiving position, lift one roller (39) of the pair of transport rollers away from the counter roller (38) against a spring force (53).

6. Apparatus according to one of claims 1 to 5, characterised in that a separating element (27) is provided in the developing bath (25), one end of which element is offset with respect to the gap between the rollers of the pair of transport rollers (38, 39) which are in the insertion position, for the purpose of diverting the one projecting sheet (15a) of material.

7. Apparatus according to one of claims 1 to 6, characterised in that one of the rollers (38, 39) of the pivotable pair of transport rollers is connected to a return stop (56).

8. Apparatus according to claim 6, characterised in that the tank (24) of the developing bath (25) containing the separating element (27), and also guide elements (28, 29), and a collecting thank (26) are housed under the pair of squeezing rollers (30, 31) in a frame (23) that can be removed from the developing station (18).

FIG.1

FIG.2

FIG.3